# EUROPEAN PATENT SPECIFICATION

(11) **EP 4 618 043 B1**
(45) Date of publication and mention of the grant of the patent: **02.12.2026**
(21) Application number: 25163405.1
(22) Date of filing: 13.03.2025
(51) Int. Cl.: G06V 20/13, G06V 20/10

(54) **METHOD AND SYSTEM FOR COMPONENT WISE SEGMENTATION AND PREDICTION OF BIOMASS SATURATION**
VERFAHREN UND SYSTEM ZUR KOMPONENTENWEISEN SEGMENTIERUNG UND VORHERSAGE DER BIOMASSESÄTTIGUNG
PROCÉDÉ ET SYSTÈME DE SEGMENTATION ET DE PRÉDICTION PAR COMPOSANTES DE SATURATION DE BIOMASSE

(30) Priority: 14.03.2024 IN 202421018713
(43) Date of publication of application: 17.09.2025
(73) Proprietor: Tata Consultancy Services Limited, Maharashtra (IN)
(72) Inventor: MOHITE, Jayantrao, 400601 Thane, Maharashtra (IN); SAWANT, Suryakant Ashok, 411057 Pune, Maharashtra (IN); SINGH, Dineshkumar Jang Bahadur, 400601 Thane, Maharashtra (IN); PANDIT, Ankur, 452018 Indore, Madhya Pradesh (IN); PAPPULA, Srinivasu, 500034 Hyderabad, Telangana (IN)
(74) Representative: Goddar, Heinz J.

(56) References cited:
- MOHITE JAYANTRAO ET AL: "Forest aboveground biomass estimation by GEDI and multi-source EO data fusion over Indian forest", vol. 45, no. 4, 2 February 2024 (2024-02-02), GB, pages 1304 - 1338, XP093270633, ISSN: 0143-1161, Retrieved from the Internet <URL:https://www.tandfonline.com/doi/pdf/10.1080/01431161.2024.2307944> [retrieved on 20250416], DOI: 10.1080/01431161.2024.2307944
- GONG MAOJIA ET AL: "Individual Tree AGB Estimation of Malania oleifera Based on UAV-RGB Imagery and Mask R-CNN", vol. 14, no. 7, 21 July 2023 (2023-07-21), pages 1493, XP093270635, ISSN: 1999-4907, Retrieved from the Internet <URL:https://www.mdpi.com/1999-4907/14/7/1493/pdf> [retrieved on 20250416], DOI: 10.3390/f14071493

## Description

### CROSS-REFERENCE TO RELATED APPLICATIONS AND PRIORITY

The present application claims priority from Indian patent application number 202421018713, filed on March 14, 2024.

### TECHNICAL FIELD

The disclosure herein generally relates to the field of a forest biomass prediction, and more particularly, a method and system for a dynamic prediction of component-wise biomass saturation using non-invasive sensing.

### BACKGROUND

Forest biomass refers to the total mass of living organisms, primarily plants, within a forest ecosystem. It includes above-ground biomass (AGB), which comprises living and dead vegetation above the soil, and below-ground biomass (BGB), consisting of roots and other below-ground organic matter. Biomass is a crucial measure for understanding the carbon storage and overall health of forest ecosystems. Understanding biomass and its saturation in forests holds immense practical significance across various domains. It is useful providing insights into the carbon sequestration potential of forests. This knowledge is needed for sustainable forest management, guiding decisions related to logging practices, afforestation, and conservation initiatives. Moreover, biomass and saturation data offer valuable inputs for biodiversity conservation efforts, as different species exhibit preferences for forests at distinct maturity stages. From an ecosystem health perspective, comprehending biomass dynamics aids in assessing the overall vitality and adaptability of forest ecosystems to environmental changes. In the realm of research and monitoring, biomass information serves as a foundational element for ecological studies, enabling scientists to unravel intricate patterns of tree growth and responses to disturbances. Policymakers leverage this understanding for formulating effective conservation strategies, ensuring the preservation of these critical ecosystems. In essence, the usefulness of comprehending biomass and its saturation extends from mitigating climate change to fostering sustainable practices and guiding conservation efforts.

A few techniques have been used for forest biomass prediction such as use of allometric equations, use of remote sensing and artificial intelligence (AI) and forest growth models. Allometric equations are used for predicting forest component biomass by establishing empirical relationships between easily measurable parameters (e.g., diameter, height) and biomass. The advantages include their simplicity and ease of application, providing a quick estimate of biomass. However, these equations have limitations in terms of generalization across diverse forest types, and they may lack the capacity to capture dynamic changes in biomass over time due to their static nature. Forest growth models adopt a process-based simulation approach, simulating ecological processes to predict biomass dynamics. The strengths lie in providing a mechanistic understanding of forest growth and facilitating scenario analysis for different management strategies. However, these models require calibration with huge amount of field data and may pose challenges due to their inherent complexity, demanding expertise in ecological modeling for effective application. Dependency on the huge amount of ground reference data limits the scalability and use of such process-based approaches. Mohite, J. et al., "Forest aboveground biomass estimation by GEDI and multi-source EO data fusion over Indian forest," International Journal of Remote Sensing, Vol. 45, No. 4, 2 February 2024, pp. 1304-1338, DOI: 10.1080/01431161.2024.2307944 is an example of prior art.

Component biomass varies spatially and temporally within a forest. Developing models that can accurately capture this variability across different regions and over time is a persistent challenge. Acquiring high-quality and comprehensive data for each component, especially for less visible parts like roots, is a challenge. The availability of ground truth data for model training and validation is crucial but is often limited. Capturing the dynamic growth patterns of tree components over time is challenging. Tree growth is influenced by various factors, and predicting changes in biomass distribution accurately demands models that can adapt to evolving conditions. Moreover, Natural disturbances, such as wildfires or insect infestations, can significantly impact forest structure and composition, affecting the distribution of biomass components. Developing models that account for disturbance effects is technically challenging. Further, every tree (and hence forest - whole or part) has a limited age, up to which it is productive from the sustainability perspective. Post this limit, either it hits a saturation point or gets into a point of return. Such information is useful for adaptive forest management by the forest authorities, private forest owners, timber farm owners, and even government agencies such as conservatory forest officers or municipal and regional authorities and planners.

### SUMMARY

Embodiments of the present disclosure present technological improvements as solutions to one or more of the above-mentioned technical problems recognized by the inventors in conventional systems. For example, in one embodiment, a method for a dynamic prediction of component-wise biomass saturation using non-invasive sensing is provided. The processor-implemented method includes collecting, via an Input/Output (I/O) interface, a non-spatial, and an unstructured knowledge of one or more trees of a predefined region from one or more published datasets and literatures, determining a real time spatial data and one or more environmental factors of each of the one or more trees using a remote sensing data, and hierarchically integrating the collected non-spatial, and unstructured knowledge of the one or more trees with the determined real time spatial data and the one or more environmental factors of each of the one or more trees to generate a geotagged sample tree reference data for a biomass modeling.

Further, the processor-implemented method includes segmenting one or more components from each of the one or more trees of the sample reference data using the high-resolution satellite data to obtain a component level segmentation of the one or more trees using a mask Region-based Convolutional Neural Networks (R-CNN) technique, training a machine learning model using the obtained component level segmentation of the one or more trees and the high-resolution optical and Synthetic Aperture Radar (SAR) data to predict presence and location of one or more components of the one or more trees, and applying the trained machine learning model to one or more unknown trees to generate one or more segmented tree components utilizing the high-resolution optical and SAR data of the one or more unknown trees.

Furthermore, the processor-implemented method includes training one or more machine learning models for each of the one or more segmented tree components incorporating biomass percentages and associated features from the high-resolution satellite data and generating a spatially detailed map of component-wise biomass allocation using the trained one or more machine learning models for each of the one or more segmented tree components. Further, the processor-implemented method leveraging a pre-trained forecasting model to get temporal biomass trends, wherein the pre-trained forecasting model includes an autoregressive integrated moving average (ARIMA) model and a long short-term memory (LSTM) model, integrating a pre-trained climate prediction model for long-term weather forecasts and a historical information of forest disturbances, and predicting one or more biomass saturation points for each of the one or more components of the tree and the tree as a whole by harnessing the spatially detailed map of component-wise biomass allocation, temporal biomass trend, long-term weather forecast and historical information of forest disturbances.

Furthermore, the processor-implemented method creating a Non-Fungible Token (NFT) for each of the one or more trees, wherein the NFT includes meta data, species, age, geo-referenced location of the one or more trees, historical information of forest disturbances, above-ground biomass (AGB), component-wise biomass, and the predicted biomass saturation point and calculating a dynamic value of the NFT in terms of market value of the predicted saturation points for each of the one or more components of the tree and the tree, wherein the saturation points include biomass value and saturation time in terms of day, week, and year.

In another embodiment, a system for a dynamic prediction of component-wise biomass saturation using non-invasive sensing is provided. The system comprises a memory storing a plurality of instructions, one or more Input/Output (I/O) interfaces, and one or more hardware processors coupled to the memory via the one or more I/O interfaces. The one or more hardware processors are configured by the instructions to collect, via an Input/Output (I/O) interface, a non-spatial, and an unstructured knowledge of one or more trees of a predefined region from one or more published datasets, literatures, determine a real time spatial data and one or more environmental factors of each of the one or more trees using a remote sensing data, wherein the remote sensing data includes a high-resolution satellite data, a light detection and ranging (LiDAR) data, a high-resolution optical and Synthetic Aperture Radar (SAR) data, and weather-related one or more indicators and hierarchically integrate the collected non-spatial, and unstructured knowledge of the one or more trees with the determined real time spatial data and the one or more environmental factors of each of the one or more trees to generate a geotagged sample tree reference data for a biomass modeling.

The one or more hardware processors are configured by the instructions to segment one or more components from each of the one or more trees of the sample reference data using the high-resolution satellite data to obtain a component level segmentation of the one or more trees using a mask R-CNN technique, train a machine learning model using the obtained component level segmentation of the one or more trees and the high-resolution optical and Synthetic Aperture Radar (SAR) data to predict presence and location of one or more components of the one or more trees and apply the trained machine learning model to one or more unknown trees to generate one or more segmented tree components utilizing the high-resolution optical and SAR data of the one or more unknown trees.

The one or more hardware processors are configured by the instructions to train one or more machine learning models for each of the one or more segmented tree components incorporating biomass percentages and associated features from the high-resolution satellite data and generate a spatially detailed map of component-wise biomass allocation using the trained one or more machine learning models for each of the one or more segmented tree components.

The one or more hardware processors are configured by the instructions to leverage a pre-trained forecasting model to get temporal biomass trends, wherein the pre-trained forecasting model includes an autoregressive integrated moving average (ARIMA) model and a long short-term memory (LSTM) model, integrate a pre-trained climate prediction model for long-term weather forecasts and a historical information of forest disturbances and predict one or more biomass saturation points for each of the one or more components of the tree and the tree as a whole by harnessing the spatially detailed map of component-wise biomass allocation, temporal biomass trend, long-term weather forecast and historical information of forest disturbances.

The one or more hardware processors are configured by the instructions to create a Non-Fungible Tokens (NFTs) for each tree, wherein the NFT includes meta data, tree species, age, georeferenced location, historical information of forest disturbances, above-ground biomass (AGB), component-wise biomass, and the predicted biomass saturation point and calculate a dynamic value of the NFT in terms of market value of the predicted saturation points for each of the one or more components of the tree and the tree, wherein the saturation points include biomass value and saturation time in terms of day, week, and year.

In yet another aspect, there are provided one or more non-transitory machine-readable information storage mediums comprising one or more instructions, which when executed by one or more hardware processors causes a method for a dynamic prediction of component-wise biomass saturation using non-invasive sensing is provided. The processor-implemented method includes collecting, via an Input/Output (I/O) interface, a non-spatial, and an unstructured knowledge of one or more trees of a predefined region from one or more published datasets and literatures, determining a real time spatial data and one or more environmental factors of each of the one or more trees using a remote sensing data, and hierarchically integrating the collected non-spatial, and unstructured knowledge of the one or more trees with the determined real time spatial data and the one or more environmental factors of each of the one or more trees to generate a geotagged sample tree reference data for a biomass modeling.

Further, the processor-implemented method includes segmenting one or more components from each of the one or more trees of the sample reference data using the high-resolution satellite data to obtain a component level segmentation of the one or more trees using a mask R-CNN technique, training a machine learning model using the obtained component level segmentation of the one or more trees and the high-resolution optical and Synthetic Aperture Radar (SAR) data to predict presence and location of one or more components of the one or more trees, and applying the trained machine learning model to one or more unknown trees to generate one or more segmented tree components utilizing the high-resolution optical and SAR data of the one or more unknown trees.

Furthermore, the processor-implemented method includes training one or more machine learning models for each of the one or more segmented tree components incorporating biomass percentages and associated features from the high-resolution satellite data and generating a spatially detailed map of component-wise biomass allocation using the trained one or more machine learning models for each of the one or more segmented tree components. Further, the processor-implemented method leveraging a pre-trained forecasting model to get temporal biomass trends, wherein the pre-trained forecasting model includes an autoregressive integrated moving average (ARIMA) model and a long short-term memory (LSTM) model, integrating a pre-trained climate prediction model for long-term weather forecasts and a historical information of forest disturbances, and predicting one or more biomass saturation points for each of the one or more components of the tree and the tree as a whole by harnessing the spatially detailed map of component-wise biomass allocation, temporal biomass trend, long-term weather forecast and historical information of forest disturbances.

Furthermore, the processor-implemented method creating a Non-Fungible Tokens (NFTs) for each tree, wherein the NFT includes meta data, tree species, age, georeferenced location, historical information of forest disturbances, above-ground biomass (AGB), component-wise biomass, and the predicted biomass saturation point and calculating a dynamic value of the NFT in terms of market value of the predicted saturation points for each of the one or more components of the tree and the tree, wherein the saturation points include biomass value and saturation time in terms of day, week, and year.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates a block diagram of a system for a dynamic prediction of component-wise biomass saturation using non-invasive sensing, according to some embodiments of the present disclosure.
FIG. 2A and 2B is a functional block diagram illustrating the system of FIG. 1 for the dynamic prediction of component-wise biomass saturation using non-invasive sensing, according to some embodiments of the present disclosure.
FIG. 3A and 3B is an exemplary flow diagram illustrating a processor-implemented method for the dynamic prediction of component-wise biomass saturation using non-invasive sensing, according to some embodiments of the present disclosure.
FIG. 4 is an exemplary flow diagram of a decentralized tree and forest asset management using NFTs and predicted biomass saturation points, according to some embodiments of the present disclosure.
FIG. 5 is a schematic diagram of a forest with available ground truth sample data and predicted data, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Understanding biomass and its saturation in forests holds immense practical significance across various domains. It is useful providing insights into the carbon sequestration potential of forests. This knowledge is needed for sustainable forest management, guiding decisions related to logging practices, afforestation, and conservation initiatives. Moreover, biomass and saturation data offer valuable inputs for biodiversity conservation efforts, as different species exhibit preferences for forests at distinct maturity stages. From an ecosystem health perspective, comprehending biomass dynamics aids in assessing the overall vitality and adaptability of forest ecosystems to environmental changes.

A few techniques are used for forest biomass prediction such as use of allometric equations, use of remote sensing and artificial intelligence (AI) and forest growth models. Below are a couple of approaches used for biomass estimation or prediction with existing challenges. Allometric equations are used for predicting forest component biomass by establishing empirical relationships between easily measurable parameters (e.g., diameter, height) and biomass. The advantages include their simplicity and ease of application, providing a quick estimate of biomass. However, these equations have limitations in terms of generalization across diverse forest types, and they may lack the capacity to capture dynamic changes in biomass over time due to their static nature. Moreover, data on Diameter at Breast Height (DBH) and height needs to be collected to develop those allometric equations for various species which is time consuming and costly.

The integration of a remote sensing, a Light Detection and Ranging (LiDAR), and a machine learning (ML) constitutes a comprehensive approach to a forest biomass prediction. Leveraging a wide coverage, ML models enhance accuracy, and LiDAR provides detailed 3D structural information. However, ML based modeling still needs the ground reference data on forest species specific DBH and height. Therefore, approaches are scalable but has the dependency on the ground reference data. Forest growth models adopt a process-based simulation approach, simulating ecological processes to predict biomass dynamics. The strengths lie in providing a mechanistic understanding of forest growth and facilitating scenario analysis for different management strategies. However, these models require calibration with huge amount of field data and may pose challenges due to their inherent complexity, demanding expertise in ecological modeling for effective application. Dependency on the huge amount of ground reference data limits the scalability and use of such process-based approaches.

Moreover, below are certain general technical challenges associated with prediction of biomass saturation. Component biomass varies spatially and temporally within a forest. Developing models that can accurately capture this variability across different regions and over time is a persistent challenge. Acquiring high-quality and comprehensive data for each component, especially for less visible parts like roots, is a challenge. The availability of ground truth data for model training and validation is crucial but is often limited. Capturing the dynamic growth patterns of tree components over time is challenging. Tree growth is influenced by various factors, and predicting changes in biomass distribution accurately demands models that can adapt to evolving conditions. Moreover, Natural disturbances, such as wildfires or insect infestations, can significantly impact forest structure and composition, affecting the distribution of biomass components. Developing models that account for disturbance effects is technically challenging.

Every tree (and hence forest - whole or part) has a limited age, up to which it is productive from the sustainability perspective. Post this limit, either it hits a saturation point or gets into a point of return. Such information is useful for adaptive forest management by the forest authorities, private forest owners, timber farm owners, and even government agencies such as conservatory forest officers or municipal and regional authorities and planners. In recent times a few companies have started using non-fungible tokens (NFTs) to tokenize trees to reward individuals and businesses who contribute towards tree-plantation to offset carbon emissions. The token could be used to track, verify, and promote the growth of the trees and can be monitored via low-orbit satellites, allowing for accurate accounting and carbon measurements. But the purpose of the NFT is limited mainly to tracking and it does not anyway indicate a real worth of it based on the potential amount of carbon sequestrated which is function of multiple factors such as tree species, age, biomass, health, etc. Also, there is gap of a forest or timber farm level potential NFT worth for the biomass gained and its potential economic value. It does not allow the forest officers, timber farm owners, or government authorities to take a data-driven decision on which part of the forest should be thinned, replaced, or rejuvenated or allowed to be felled because they have reached their biomass saturation or beyond limit or threshold of recommended biodiversity levels.

Embodiments herein provide a method and system for a dynamic prediction of component-wise biomass saturation using non-invasive sensing. The disclosure proposes approach based on hierarchical integration of non-spatial, unstructured knowledge from the literature along with remote sensing and long and short-term weather (spatial) intelligently for automatic spatial tree selection for biomass allocation prediction. This eliminates the need for ground data collection. Further, an approach is disclosed which makes use of these spatial tree locations, LiDAR data and high-resolution satellite data for component level segmentation. By combining these together, our approach eliminates the continuous need for LiDAR data for component segmentation. Further, invention proposed ML based model for component level biomass allocation. Finally, the embodiments disclose an approach for predicting component wise biomass saturation points using the temporal biomass profile and long-range weather forecast. Finally, the system provides a decentralized tree and forest asset management using NFTs and predicted biomass saturation points.

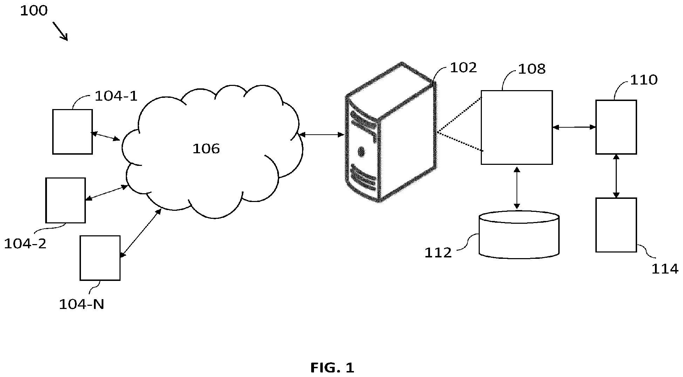

Referring now to the drawings, and more particularly to FIG. 1 through FIG. 5, where similar reference characters denote corresponding features consistently throughout the figures, there are shown preferred embodiments, and these embodiments are described in the context of the following exemplary system and/or method.

FIG. 1 illustrates a block diagram of a system 100 for a voice assisted defect logging and quality inspection, according to some embodiments of the present disclosure. Although the present disclosure is explained considering that the system 100 is implemented on a server, it may be understood that the system 100 may comprise one or more computing devices 102, such as a laptop computer, a desktop computer, a notebook, a workstation, a cloud-based computing environment and the like. It will be understood that the system 100 may be accessed through one or more input/output interfaces 104-1, 104-2... 104-N, collectively referred to as I/O interface 104. Examples of the I/O interface 104 may include, but are not limited to, a user interface, a portable computer, a personal digital assistant, a handheld device, a smartphone, a tablet computer, a workstation, and the like. The I/O interface 104 is communicatively coupled to the system 100 through a network 106.

In an embodiment, the network 106 may be a wireless or a wired network, or a combination thereof. In an example, the network 106 can be implemented as a computer network, as one of the different types of networks, such as virtual private network (VPN), intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), and Wireless Application Protocol (WAP), to communicate with each other. Further, the network 106 may include a variety of network devices, including routers, bridges, servers, computing devices, storage devices. The network devices within the network 106 may interact with the system 100 through communication links.

The system 100 supports various connectivity options such as BLUETOOTH^{®}, USB, ZigBee, and other cellular services. The network environment enables connection of various components of the system 100 using any communication link including Internet, WAN, MAN, and so on. In an exemplary embodiment, the system 100 is implemented to operate as a stand-alone device. In another embodiment, the system 100 may be implemented to work as a loosely coupled device to a smart computing environment. Further, the system 100 comprises at least one memory 110 with a plurality of instructions, one or more databases 112, and one or more hardware processors 108 which are communicatively coupled with the at least one memory to execute a plurality of modules 114 therein. The components and functionalities of the system 100 are described further in detail.

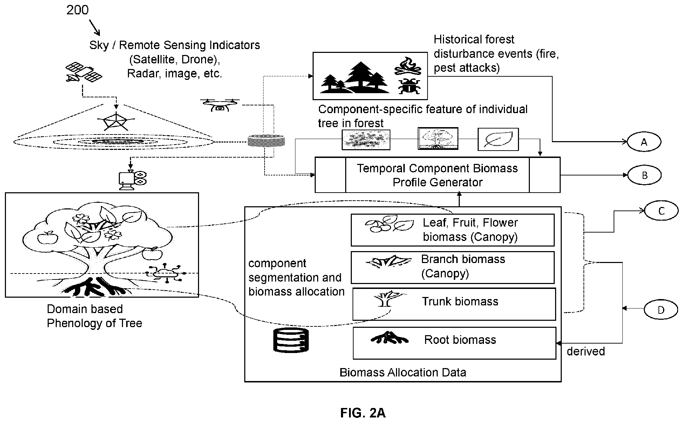

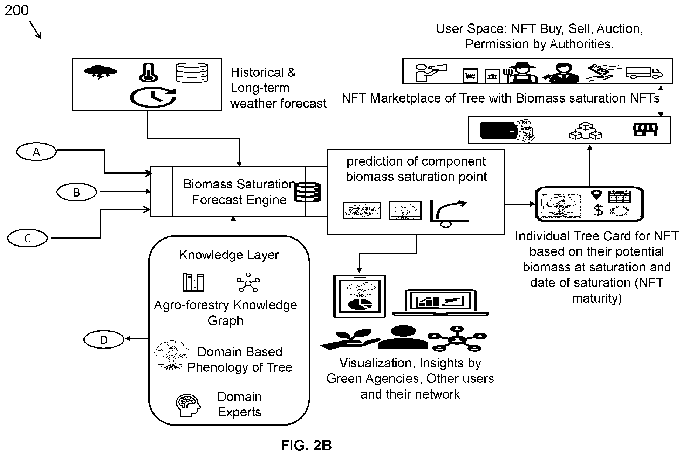

FIG. 2A and 2B (collectively referred as FIG. 2) is a functional block diagram 200 to illustrate the system 100 for the dynamic prediction of component-wise biomass saturation using non-invasive sensing, according to some embodiments of the present disclosure. In one embodiment, the system 100 is configured for automatic selection of tree samples and their component segmentation for biomass allocation modeling uses approach based on hierarchical integration on non-spatial and spatial data, leveraging insights from existing literature, domain knowledge, and remote sensing. The approach of the present disclosure makes use of existing knowledge on tree species, age and associated biomass allocation percentages at certain age and region. Such knowledge is currently in the unorganized state and non-spatial form. This information available can be combined with remote sensing derived information on tree species, age and weather derived indicators to spatially decide the tree locations and assigning them biomass allocation. This information is static information available for specific trees at specific time (age). Aggregating insights from multiple sources and combining them with remote sensing and weather derived indicators will provide the spatial data on tree samples and their specific biomass allocation. This data would serve as the sample reference data for subsequent biomass modeling at a spatial scale. Further, tree crowns are segmented using the high-resolution satellite data and this would be combined with LiDAR data to get the component level segmentation such as segmented leaves, segmented branches, segmented trunk, segmented bark etc. This employs advanced computer vision and deep learning techniques like Mask R-CNN for component segmentation.

Further, the system 100 is configured for non-invasive component-wise biomass allocation modeling begin with LiDAR-based segmentation, where sample trees are precisely delineated into components, such as leaves, stems, and bark, providing essential ground truth labels. Subsequently, high-resolution optical and Synthetic Aperture Radar (SAR) data from the same trees are employed to train machine learning models. These models, integrating visual and SAR data, learn to predict the presence and location of tree components. Once validated, these models are applied to unknown regions or trees, utilizing high-resolution optical and SAR data to generate segmented tree components. Additionally, separate machine learning models are trained for each biomass component, incorporating biomass percentages and associated features from high-resolution satellite data, ensuring precise estimation. These component biomass models are then deployed across unknown trees, generating a spatially detailed map of component-wise biomass allocation.

Further, the system 100 is configured for predicting component biomass saturation points harnesses the temporal biomass profile and long-range weather forecasts. ML models for component-wise biomass estimation are utilized to predict biomass at a spatial scale and multiple time instances since the tree's planting, capturing its entire temporal profile. Historical data, including disturbances like insect pests and wildfires, enriches this temporal profile. To predict component biomass saturation points, this information is amalgamated with long-term weather forecasts. Leveraging forecasting models such as autoregressive integrated moving average (ARIMA) or long short-term memory (LSTM) for temporal biomass trends and integrating climate prediction models for long-range weather forecasts, this approach predicts the saturation points for individual tree components and the tree as a whole. It generates a forest spatial map indicating the areas with the average biomass values of all the trees in it, at any time instance.

Further, the system 100 is configured to calculate the dynamic value of the NFT in terms of market value of its biomass if sold in the market for timber, fuel, and fiber. This helps in understanding the economic value of the tree besides its sustainable contribution due to carbon sequestration. It also provides a NFT wallet for the forest associated with the one or more trees, and hence dynamically calculates the total potential economic and sustainable value of the forest at any instance, which varies due to biomass variation, Stakeholders can use the NFT marketplace platform to buy, sell and/or participate in the auction of the NFTs. Accordingly, government or forest officers or able to transfer the rights for management or felling the trees or plantation of new trees using the NFT. They can use the biomass map to monitor the compliance and accordingly take actions on non-compliance.

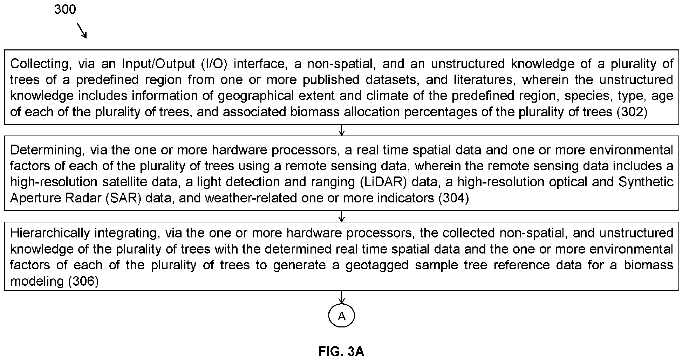

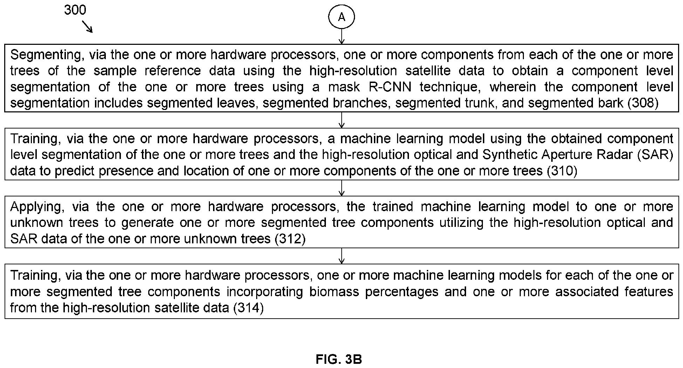

FIG. 3A and 3B (collectively referred as FIG. 3) is a flow diagram illustrating a processor-implemented method 300 for the dynamic prediction of component-wise biomass saturation using non-invasive sensing implemented by the system 100 of FIG. 1, in accordance with an embodiment of the present disclosure. Functions of the components of the system 100 are now explained through steps of flow diagram in FIG. 3, according to some embodiments of the present disclosure. In the method and system for the automatic selection of tree samples and their component segmentation for biomass allocation modeling, a hierarchical integration of non-spatial, unstructured, and spatial datasets is strategically employed, considering insights from diverse sources such as existing literature, domain expertise, and advanced remote sensing technologies. The foundation is laid upon existing knowledge pertaining to tree species, age, and associated biomass allocation percentages. This existing knowledge is seamlessly fused with spatially derived insights from remote sensing data, encompassing tree species, age, and indicators related to weather.

Initially, at step 302 of the processor-implemented method 300, the one or more hardware processors 108 are configured by the programmed instructions to collect, via an Input/Output (I/O) interface, a non-spatial, and an unstructured knowledge of one or more trees of a predefined region from one or more published datasets, and literatures. The unstructured knowledge includes information of geographical extent and climate of the predefined region, species, type, age of each of the one or more trees, and associated biomass allocation percentages of the one or more trees. The system 100 involves the integration of heterogeneous datasets, where the existing literature contributes static, non-spatial knowledge, and remote sensing data augments it with spatially explicit information.

At the next step 304 of the processor-implemented method 300, the one or more hardware processors 108 are configured by the programmed instructions to determine a real time spatial data and one or more environmental factors of each of the one or more trees using a remote sensing data. The remote sensing data comprises at least one of a high-resolution satellite data, a light detection and ranging (LiDAR) data, a high-resolution optical and Synthetic Aperture Radar (SAR) data, and one or more weather-related indicators.

In the present disclosure, the collected existing/published knowledge is seamlessly fused with spatially derived insights from remote sensing data, encompassing species and age of the one or more trees, and indicators related to weather. The remote sensing data serves as the spatially informed element, dynamically determining the precise locations of trees and assigning them specific biomass allocations corresponding to distinct ages and regions. The spatially enriched dataset serves as sample reference data for subsequent biomass modeling at a spatial scale.

At the next step 306 of the processor-implemented method 300, the one or more hardware processors 108 are configured by the programmed instructions to hierarchically integrate the collected non-spatial, and unstructured knowledge of the one or more trees with the determined real time spatial data and the one or more environmental factors of each of the one or more trees to generate a geo-tagged sample tree reference data for a biomass modeling. The hierarchical integration aspect lies in the strategic amalgamation of these diverse datasets, leading to an informed spatial decision-making process for tree sample selection and subsequent biomass allocation modeling. The approach of present disclosure is not merely a juxtaposition of datasets but involves intricate algorithmic processes to harmonize and synthesize knowledge from disparate sources into a cohesive spatial framework.

At the next step 308 of the processor-implemented method 300, the one or more hardware processors 108 are configured by the programmed instructions to segment one or more components from each of the one or more trees of the sample reference data using the high-resolution satellite data to obtain a component level segmentation of the one or more trees using a mask Region-based Convolutional Neural Networks (R-CNN) technique. The component level segmentation includes at least one of one or more segmented leaves, one or more segmented branches, a segmented trunk, and a segmented bark.

The segmentation, leveraging advanced techniques like Mask R-CNN, is combined with a Light Detection and Ranging (LiDAR) data to achieve intricate component-level segmentation, the one or more segmenting leaves, branches, trunk, bark, and so on. This integration of non-spatial, unstructured, and spatial datasets in hierarchical manner and advanced computer vision techniques establishes a unique method and system for automated sample selection and precise component segmentation, which would be useful for accurate biomass allocation modeling.

At the next step 310 of the processor-implemented method 300, the one or more hardware processors 108 are configured by the programmed instructions to train a machine learning model using the obtained component level segmentation of the one or more trees and the high-resolution optical and Synthetic Aperture Radar (SAR) data to predict presence and location of one or more components of the one or more trees.

In the LiDAR-based segmentation and model training phase, the target is to accurately delineate sample trees into distinct components such as leaves, stems, and bark. The LiDAR data serves as the primary source for this segmentation task, providing precise ground truth labels for each component. The subsequent step involves the acquisition of high-resolution optical and the SAR data from the identical trees previously subjected to the LiDAR-based segmentation. The amalgamation of these datasets forms the foundation for training machine learning models. These ML models, specifically devised for spatial understanding, encompass both visual and SAR features. The objective of the method and the system 100 of the present disclosure is to enable the models to predict with accuracy the presence and spatial coordinates of individual tree components. Following the rigorous training and validation of these models, they are effectively deployed in unexplored regions or trees, where they process high-resolution optical and the SAR data to generate finely segmented tree components. In essence, the target variable is the spatial distribution and location of components of one or more trees, with features comprising the comprehensive dataset of the LiDAR, high-resolution optical, and the SAR data. The chosen models are machine learning models tailored for spatial prediction tasks, leveraging the distinctive features extracted from the dataset to accurately predict the presence and coordinates of tree components.

At the next step 312 of the processor-implemented method 300, the one or more hardware processors 108 are configured by the programmed instructions to apply the trained machine learning model to one or more unknown trees to generate one or more segmented components of the one or more trees, utilizing the high-resolution optical and SAR data of the one or more unknown trees.

Finally, at the last step 314 of the processor-implemented method 300, the one or more hardware processors 108 are configured by the programmed instructions to train one or more machine learning models for each of the one or more segmented components of the one or more trees incorporating biomass percentages and associated features from the high-resolution satellite data.

In the biomass percentage modeling phase, the target variable is the biomass percentage of each specific tree component. A dedicated machine learning model is trained using this biomass percentage as the target variable, with associated features extracted from high-resolution satellite data. These features encompass visual characteristics and textures pertinent to each segmented component. Unlike traditional approaches using the entire tree for feature extraction, this methodology of the present disclosure focuses on the respective segmented component, ensuring a more precise and component-specific feature representation. The choice of models revolves around machine learning algorithms adept at regression tasks, facilitating the accurate prediction of biomass percentage for each segmented component. This approach is replicated for all biomass components, employing similar models trained on their respective features. Once trained, these models are deployed on all unknown trees, generating spatially detailed component-wise biomass maps.

Predicting biomass saturation points for tree components involves a comprehensive approach that leverages both temporal biomass profiles and long-range weather forecasts. Machine learning models designed for component-wise biomass estimation play a crucial role in predicting biomass at a spatial scale and multiple time instances from the tree's planting. This captures the entire temporal profile of the tree's growth. Historical data, enriched with information on disturbances like insect pests and wildfires, contributes to a more nuanced understanding of the tree's development over time. To forecast component biomass saturation points, this temporal information is combined with long-term weather predictions.

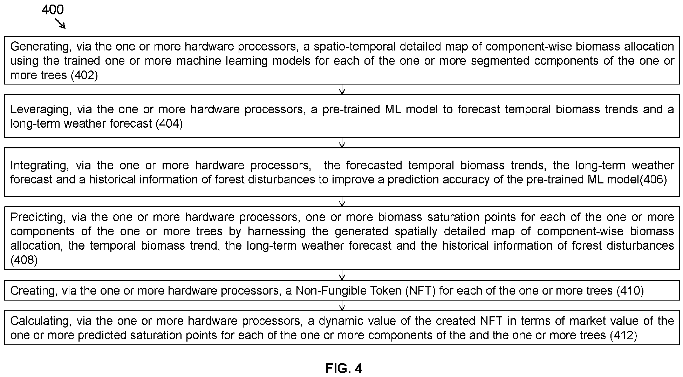

FIG. 4 is a flow diagram 400 illustrating a processor-implemented method 300 of a decentralized tree and forest asset management using NFTs and predicted biomass saturation points implemented by the system 100 of FIG. 1, according to some embodiments of the present disclosure.

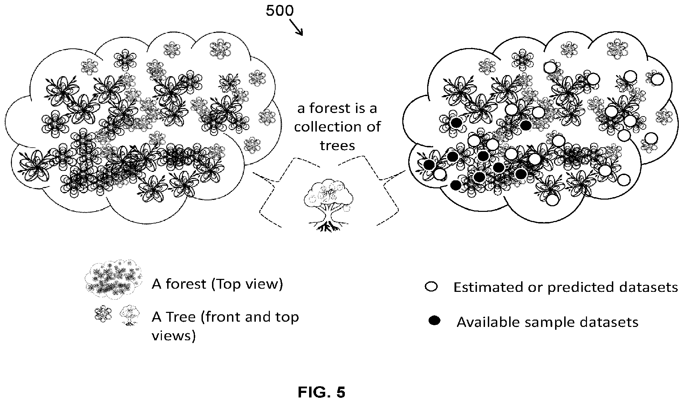

Initially, at the step 402 of the processor-implemented method 300, the one or more hardware processors 108 are configured by the programmed instructions to generate a spatio-temporal detailed map of component-wise biomass allocation using the trained one or more machine learning models for each of the one or more segmented components of the one or more trees as shown in FIG. 5.

At the next step 404 of the processor-implemented method 300, the one or more hardware processors 108 are configured by the programmed instructions to leverage a pre-trained ML model to forecast temporal biomass trends and a long-term weather forecast. The pre-trained ML model includes at least one of an autoregressive integrated moving average (ARIMA) model and a long short-term memory (LSTM) model. In the technical execution, autoregressive integrated moving average (ARIMA) or long short-term memory (LSTM) models can be applied to capture temporal biomass trends. These models are adept at recognizing patterns and dependencies in time-series data. This trend can be combined with long range weather forecast for the prediction of saturation points for individual tree components and the tree as a whole. This technical approach ensures a holistic understanding of the factors influencing biomass saturation, enabling informed predictions based on both temporal and climatic considerations.

At the next step 406 of the processor-implemented method 300, the one or more hardware processors 108 are configured by the programmed instructions to integrate the forecasted temporal biomass trends, the long-term weather forecast and a historical information of forest disturbances to improve a prediction accuracy of the pre-trained ML model.

At the next step 408 of the processor-implemented method 300, the one or more hardware processors 108 are configured by the programmed instructions to predict one or more biomass saturation points for each of the one or more components of the one or more trees by harnessing the generated spatially detailed map of component-wise biomass allocation, the temporal biomass trend, the long-term weather forecast and the historical information of forest disturbances. The technical process begins with the integration of advanced machine learning models to predict biomass saturation points for individual tree components, leveraging historical data enriched with information on disturbances and long-term weather forecasts.

At the next step 410 of the processor-implemented method 300, the one or more hardware processors 108 are configured by the programmed instructions to create a Non-Fungible Token (NFT) for each of the one or more trees. The system 100 initiates the creation of Non-Fungible Token (NFT) for each of the one or more trees. Smart contracts, executed on a blockchain network, encode the metadata associated with each NFT, encompassing tree species, age, pest/disease history, above-ground biomass (AGB), and the predicted biomass saturation point. This means that the one or more trees which have reached their biomass saturation can only be allowed to be traded. In another variation, each of the one or more trees can be identified in the blockchain and can be monitored for its health periodically and tracked as NFT, but they would not be available for the transfers. This would provide a tree as well as forest level view of how many NFTs can only be transferred to other owners for physical activities such as thinning or felling. This blockchain-based NFT ecosystem ensures the security, transparency, and decentralized nature of the tree asset management system.

Finally, at the last step 412 of the processor-implemented method 300, the one or more hardware processors 108 are configured by the programmed instructions to calculate a dynamic value of the created NFT in terms of market value of the one or more predicted saturation points for each of the one or more components and the one or more trees, wherein the one or more saturation points include a biomass value and saturation time in terms of day, week, and year.

The system 100 of the present disclosure not only transforms trees into digital assets but also lays the foundation for a decentralized marketplace where these NFTs can be traded. The fusion of machine learning predictions and blockchain technology creates a robust and transparent system for managing and trading tree assets, offering a revolutionary paradigm for sustainable forestry practices.

In one example, wherein a hypothetical tree species "Acer fictus" (Fictitious Maple), is considered and expert knowledge is assumed about its biomass allocation.
(a) Species Name: Acer fictus (Fictitious Maple)
(b) **Growth Characteristics:** Acer fictus is known for its rapid growth, especially in the early years of its life.
(c) **Biomass Allocation Pattern:** For Acer fictus, it's well-documented that the typical biomass allocation at age 10 and height 15 meters is approximately as follows:
   a. Leaves: 25%
   b. Stem: 25%
   c. Trunk: 20%
   d. Branches: 30%
(d) **Climate Preference:** Acer fictus thrives in temperate regions and prefers moderately humid conditions. Temperature range is 20-32 and humidity is 70-85%
(e) **Study Area:** Forest region of Annamalai

The next step involves leveraging advanced remote sensing and weather datasets to get the spatial locations of trees. Based on the information available from the above step, the system 100 accesses required remote sensing data from optical satellites such as Landsat, Sentinel-2, and SAR satellites such as Sentinel-1, RADARSAT etc. Moreover, the system 100 accesses climatic variables such as temperature and humidity. In addition to this vector datasets on administrative boundaries and forest area maps are used. Using the forest area maps and vector boundaries the system 100 focuses (or can focus) on the study area mentioned (e.g., that is Annamalai forest in this case). Further, based on the available information from the respective literature and making use of satellite and weather data, the system can delineate the Acer fictus trees with similar characteristics. This tree layer will be combined with local variability in terms of topography, agro-climate etc. to get the optimal spatial tree locations and component wise biomass is allocated to those trees.

Based on the previous step information, the system 100 is configured to study area, forest type, tree species, age, climate, and agro-climatic zone information, available for the study carried out for the Acer fictus. The system 100 uses a vector layer and forest maps to delineate the forest area of Annamalai. Further, remote sensing data is used to derive tree specific attributes such as tree species, age, height etc. and using the non-spatial information from above step and spatial information from remote sensing, trees with Acer fictus which has age of 10 years, height of 15 meters, climatic range as mentioned in above step are detected. This is combined with other layers such as topography, slope etc., to optimally select the Acer fictus trees and component wise biomass is allocated to those trees.

At the next step, the system 100 involves the detection and delineation of individual tree components using the LiDAR data for detected sample trees. Initially, LiDAR point cloud data is collected, capturing detailed 3D spatial information about the tree canopy. This raw point cloud is processed to filter out noise and ensure precision in subsequent analyses. ${P}_{filtered} = NoiseReduction \left({P}_{LiDAR}\right)$ (1)

The segmentation task begins with the delineation of individual trees within the LiDAR data, achieved through point cloud clustering techniques or algorithms like DBSCAN (Density-Based Spatial Clustering of Applications with Noise). Denoting the cluster function as C_{DBSCAN}(P_{Filtered}), it results in individual tree point clouds *{P_{Tree1}, P_{Tree2}, ...}.*

Once individual trees are identified, the focus shifts to segmenting distinct components, such as leaves, stems, and bark. LiDAR data's capacity to capture fine-grained details allows for precise discrimination between these components. Advanced algorithms are employed for point cloud segmentation, with methodologies like region growing or graph-cut algorithms coming into play. For leaves, which often form complex structures, point cloud clustering methods might be augmented with techniques like voxelization to enhance segmentation accuracy. ${P}_{leaves} , {P}_{stems} , {P}_{bark} , {P}_{Trunk} = Segmentation \left({P}_{Tree}\right)$ (2)

The success of LiDAR-based segmentation relies on developing algorithms capable of exploiting the unique signatures of each tree component within the point cloud. This involves understanding the characteristic patterns of returns associated with leaves, stems, and bark. Mathematical expressions, such as intensity-based thresholds or feature extraction using machine learning models, are integrated to discern these patterns. For instance, utilizing the intensity information from LiDAR returns aids in distinguishing between leaves and woody components. Incorporating machine learning techniques as known in the art, specifically deep learning architectures like PointNet or PointCNN, further refines the segmentation process. These models leverage the spatial relationships and patterns present in the 3D point cloud to predict the boundaries and classifications of different tree components. Training datasets enriched with manually annotated LiDAR point clouds contribute to the development of robust models. This approach helps in detailed and accurate segmented representations of tree structures and acts as a ground truth for development of biomass allocation modeling.

Further, LiDAR delineated tree components and component biomass obtained in earlier step, together may form the reference data. $Reference Data = \left\{\left.{P}_{leaves}, {P}_{stems}, {P}_{bark}, {P}_{trunk}\right), Biomass\right\}$ (3)

Simultaneously, very high-resolution data, encompassing visual, textural, optical, and Synthetic Aperture Radar (SAR) features, is utilized to derive component-specific and tree-specific characteristics. This diverse feature set forms the input space for the subsequent machine learning (ML) regression model. Feature set will be denoted as D_{VHR}. 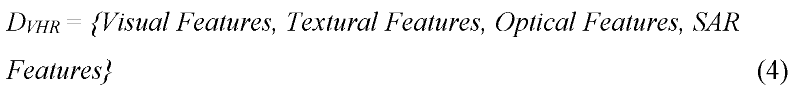 DVHR = {Visual Features, Textural Features, Optical Features, SAR Features} (4)

The regression model, constructed as a supervised learning problem, deploys component biomass as the target variable and integrates the high-resolution data features as predictors. The ML model, tailored for regression tasks, learns the relationships between the derived features and the corresponding biomass values. It transforms the regression problem into a predictive framework capable of estimating biomass for each tree component. The model training leverages a dataset where the ground truth is the component biomass obtained through LiDAR segmentation. $ML Model : {F}_{ML} \left(Features\right) = Component Biomass Prediction$ (5)

The final ML model serves as a predictive engine for generating tree-level, component-wise biomass estimates. This integrated LiDAR and high-resolution data approach not only refines biomass predictions at the component level but also extends to the comprehensive estimation of tree-level biomass. The fusion of detailed 3D LiDAR-derived structures with rich, high-resolution feature sets showcases a holistic methodology for accurate and spatially explicit biomass allocation modeling.

In another aspect, the ML model for component biomass estimation is used further for estimating temporal biomass of individual trees and stands. This way, temporal and component level biomass are obtained from the start of tree. This temporal biomass profile for each component is combined with temporal and historical information on disturbances like insect pests and wildfires and fed to forecasting models such as autoregressive integrated moving average (ARIMA) and long short-term memory (LSTM) to get temporal biomass trends. Further, data on long-range weather forecasts are used to modify the saturation point of individual components. The system and method of the present disclosure are adaptive and can consider near-real time data or short-term predictions on any disturbances or climatic changes to adjust the saturation point. This holistic approach, amalgamating temporal and climatic considerations, establishes a robust framework for making informed predictions regarding biomass saturation points in tree components.

In yet another embodiment, to make use of this method and the system 100 of the present disclosure for (or by) various stakeholders, including farmers, governmental bodies, and forest departments, the system and method is disclosed for Non-Fungible Token (NFT) creation, linking each NFT to a specific tree along with its predicted biomass saturation point. Rather than providing a default value to all the trees of the same species, the method, and the system of the present disclosure enable implementation of a dynamic NFT value to each tree considering its meta data. This ensures that valuation is in synchronous with the current on ground health of the tree and biomass allocated. This dynamism brings transparency amongst the stakeholders involved in the tree and forest management. In case of a forest fire, when a given number of trees are lost, then the loss can be quantified in terms of the NFTs and Forest NFTs. Also, when part of the forest (private or public) reaches a maturity level or aging, then the rights for felling can be transferred in lieu of the equal amount of NFTs for same species and biomass cultivated elsewhere. This approach helps in a sure, authentic, and verifiable way of Transfer of Sustainable Forest Management Rights (TSFMR) across the globe. Such an approach also helps socially for the tribal population who depend on the forest by products for their life and livelihood. NFTs will bring a social justice in terms of the forest areas or trees or groups of trees allowed to be consumed by them for fuel and fiber. This method also provides a way to measure objectively the amount of afforestation or deforestation or degradation over a period.

This method of the present disclosure transforms trees into unique, tradable digital assets, enabling a decentralized and transparent tree asset management system. The system operates by associating each NFT with comprehensive metadata, including tree species, age, information on pest/disease occurrences, above-ground biomass (AGB), and the predicted biomass saturation point. These metadata provide a rich profile of the tree's characteristics and development over time, offering valuable insights to potential investors or stakeholders. The NFT creation process integrates smart contracts on a blockchain network, ensuring the security, authenticity, and traceability of each tree NFT. The predicted biomass saturation point, derived from advanced machine learning models, adds a dynamic element to the NFT's value proposition, reflecting the tree's anticipated growth trajectory. This decentralized NFT-based tree asset management system holds several advantages. For instance, the system facilitates transparent and immutable record-keeping of tree-related information, incentives sustainable forestry practices, and opens new avenues for Eco-conscious investment. Tree owners can trade these NFTs, providing a unique financial avenue while promoting environmental awareness. **In** conclusion, the system 100 of the present disclosure harmonizes technology, environmental sustainability, and decentralized finance, fostering a unique approach/method to tree asset management through NFTs. This convergence offers a glimpse into the future of sustainable investments and transparent ecosystems, where every tree becomes a digitally tradable asset with its unique story encoded in the blockchain.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address unresolved problems of reliance on ground reference data either for ML based modeling for biomass allocation or process-based modeling which limits the applicability of models. Most of the existing biomass allocation models are static in nature. Embodiments herein provide a method and system for a dynamic prediction of component-wise biomass saturation using non-invasive sensing. The system 100 of the present disclosure implements the method of FIG. 3 based on hierarchical integration of non-spatial, unstructured knowledge obtained from the literature along with remote sensing and long and short-term weather (spatial) intelligently for automatic spatial tree selection for biomass allocation prediction. This eliminates the need for ground data collection. Further, the method of the present disclosure makes use of these spatial tree locations, LiDAR data and high-resolution satellite data for component level segmentation. By combining these together, the method of the present disclosure eliminates the continuous need for LiDAR data for component segmentation. Further, ML based model as implemented by the system 100 of the present disclosure enables component level biomass allocation. Furthermore, the embodiments disclose an approach for predicting component wise biomass saturation points using the temporal biomass profile and long-range weather forecast. Finally, the system 100 provides a decentralized tree and forest asset management using NFTs and predicted biomass saturation points.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (300) comprising:
collecting (302), via an Input/Output (I/O) interface, a non-spatial and an unstructured knowledge of one or more trees of a predefined region from one or more published datasets, and literatures, wherein the unstructured knowledge includes information of geographical extent and climate of the predefined region, species, type, age of each of the one or more trees, and one or more associated biomass allocation percentages of the one or more trees;
determining (304), via one or more hardware processors, a real time spatial data and one or more environmental factors of each of the one or more trees using a remote sensing data, wherein the remote sensing data comprises a high-resolution satellite data, a light detection and ranging (LiDAR) data, a high-resolution optical and Synthetic Aperture Radar (SAR) data, and one or more weather-related indicators;
hierarchically integrating (306), via the one or more hardware processors, the collected non-spatial and unstructured knowledge of the one or more trees with the determined real time spatial data and the one or more environmental factors of each of the one or more trees to generate a geotagged sample tree reference data for a biomass modeling;
segmenting (308), via the one or more hardware processors, one or more components from each of one or more trees of the geotagged sample reference data using the high-resolution satellite data to obtain a component level segmentation of the one or more trees using a mask Region-based Convolutional Neural Networks (R-CNN) technique, the light detection and ranging (LiDAR) data providing ground-truth labels for each one or more components;
training (310), via the one or more hardware processors, a machine learning (ML) model using the obtained component level segmentation of the one or more trees and the high-resolution optical and Synthetic Aperture Radar (SAR) data to predict presence and a location of one or more components of each of the one or more trees;
applying (312), via the one or more hardware processors, the trained ML model to one or more unknown trees to generate one or more segmented components of the one or more unknown trees utilizing the high-resolution optical and SAR data of the one or more unknown trees; and
training (314), via the one or more hardware processors, one or more machine learning (ML) models for each of the one or more segmented components of the one or more unknown trees incorporating biomass percentages as a target variable and one or more associated features from the high-resolution satellite data.

2. The processor-implemented method (300) as claimed in claim 1, further comprising:
generating (402), via the one or more hardware processors, a spatio-temporal detailed map of component-wise biomass allocation using the trained one or more ML models for each of the one or more segmented components of the one or more unknown trees;
leveraging (404), via the one or more hardware processors, a pre-trained ML model to forecast temporal biomass trends and a long-term weather forecast, wherein the pre-trained ML model includes at least one of an autoregressive integrated moving average (ARIMA) model and a long short-term memory (LSTM) model;
integrating (406), via the one or more hardware processors, the forecasted temporal biomass trends, the long-term weather forecast and a historical information of forest disturbances to improve a prediction accuracy of the pre-trained ML model;
predicting (408), via the one or more hardware processors, one or more biomass saturation points for each of the one or more components of the one or more unknown trees by harnessing the generated spatio-temporal detailed map of component-wise biomass allocation, the temporal biomass trend, the long-term weather forecast and the historical information of forest disturbances;
creating (410), via the one or more hardware processors, a Non-Fungible Token (NFT) for each of the one or more unknown trees; and
calculating (412), via the one or more hardware processors, a dynamic value of the created NFT for each of the one or more unknown trees in terms of market value of the one or more predicted saturation points for each of the one or more components of the and the one or more trees, wherein the one or more saturation points include a biomass value and saturation time in terms of day, week, and year.

3. The processor-implemented method (300) as claimed in claim **1,** wherein the component level segmentation comprises at least one of one or more segmented leaves, one or more segmented branches, a segmented trunk, and a segmented bark.

4. The processor-implemented method (300) as claimed in claim 1, wherein the NFT for each of the one or more unknown trees comprises at least one of meta data, species of the one or more trees, an age of each of the one or more trees, geo-referenced location of the one or more trees, the historical information of forest disturbances, an above-ground biomass (AGB), a component-wise biomass, and the predicted biomass saturation point.

5. The processor-implemented method (300) as claimed in claim 1, wherein the historical information of forest disturbances is obtained from a user and derived from the high-resolution satellite data.

6. A system (100) comprising:
a memory (110) storing instructions;
one or more Input/Output (I/O) interfaces (104); and
one or more hardware processors (108) coupled to the memory (110) via the one or more I/O interfaces (104), wherein the one or more hardware processors (108) are configured by the instructions to:
collect a non-spatial and an unstructured knowledge of one or more trees of a predefined region from one or more published datasets, and literatures, wherein the unstructured knowledge includes information of geographical extent and climate of the predefined region, species, a type, an age of each of the one or more trees, and one or more associated biomass allocation percentages of the one or more trees;
determine a real time spatial data and one or more environmental factors of each of the one or more trees using a remote sensing data, wherein the remote sensing data comprises a high-resolution satellite data, a light detection and ranging (LiDAR) data, a high-resolution optical and Synthetic Aperture Radar (SAR) data, and one or more weather-related indicators;
hierarchically integrate the collected non-spatial and unstructured knowledge of the one or more trees with the determined real time spatial data and the one or more environmental factors of each of the one or more trees to generate a geo-tagged sample tree reference data for a biomass modeling;
segment one or more components from each of one or more trees of the geo-tagged sample reference data using the high-resolution satellite data to obtain a component level segmentation of the one or more trees using a mask Region-based Convolutional Neural Networks (R-CNN) technique, the light detection and ranging (LiDAR) data providing ground-truth labels for each one or more components,
wherein the component level segmentation comprises at least one of one or more segmented leaves, one or more segmented branches, a segmented trunk, and a segmented bark;
train a machine learning (ML) model using the obtained component level segmentation of the one or more trees and the high-resolution optical and Synthetic Aperture Radar (SAR) data to predict presence and a location of one or more components of each of the one or more trees;
apply the trained ML model to one or more unknown trees to generate one or more segmented components of the one or more unknown trees utilizing the high-resolution optical and SAR data of the one or more unknown trees; and
train one or more machine learning models for each of the one or more segmented components of the one or more unknown trees incorporating biomass percentages as a target variable and one or more associated features from the high-resolution satellite data.

7. The system (100) as claimed in claim 6, wherein the one or more hardware processors (108) are configured by the instructions to:
generate a spatio-temporal detailed map of component-wise biomass allocation using the trained one or more ML models for each of the one or more segmented components of the one or more trees;
leverage a pre-trained ML model to forecast temporal biomass trends and a long-term weather forecast, wherein the pre-trained ML model includes at least one of an autoregressive integrated moving average (ARIMA) model and a long short-term memory (LSTM) model;
integrate the forecasted temporal biomass trends, the long-term weather forecast and a historical information of forest disturbances to improve a prediction accuracy of the pre-trained ML model;
predict one or more biomass saturation points for each of the one or more components of the one or more unknown trees by harnessing the generated spatially detailed map of component-wise biomass allocation, the temporal biomass trend, the long-term weather forecast and the historical information of forest disturbances;
create a Non-Fungible Token (NFT) for each of the one or more trees; and
calculate a dynamic value of the created NFT in terms of market value of the one or more predicted saturation points for each of the one or more components and one or more trees, wherein the one or more saturation points include a biomass value and saturation time in terms of day, week, and year.

8. The system (100) as claimed in claim 6, wherein the component level segmentation comprises at least one of one or more segmented leaves, one or more segmented branches, a segmented trunk, and a segmented bark.

9. The system (100) as claimed in claim 6, wherein the NFT includes meta data, species of the one or more trees, an age of each of the one or more trees, geo-referenced location of the one or more trees, the historical information of forest disturbances, an above-ground biomass (AGB), a component-wise biomass, and the predicted biomass saturation point.

10. The system (100) as claimed in claim 6, wherein the historical information of forest disturbances is obtained from a user and derived from the high-resolution satellite data.

11. One or more non-transitory machine-readable information storage mediums comprising one or more instructions which when executed by one or more hardware processors cause:
collecting, via an Input/Output (I/O) interface, a non-spatial and an unstructured knowledge of one or more trees of a predefined region from one or more published datasets, and literatures, wherein the unstructured knowledge includes information of geographical extent and climate of the predefined region, species, type, age of each of the one or more trees, and one or more associated biomass allocation percentages of the one or more trees;
determining a real time spatial data and one or more environmental factors of each of the one or more trees using a remote sensing data, wherein the remote sensing data comprises a high-resolution satellite data, a light detection and ranging (LiDAR) data, a high-resolution optical and Synthetic Aperture Radar (SAR) data, and one or more weather-related indicators;
hierarchically integrating the collected non-spatial and unstructured knowledge of the one or more trees with the determined real time spatial data and the one or more environmental factors of each of the one or more trees to generate a geotagged sample tree reference data for a biomass modeling;
segmenting one or more components from each of one or more trees of the geotagged sample reference data using the high-resolution satellite data to obtain a component level segmentation of the one or more trees using a mask Region-based Convolutional Neural Networks (R-CNN) technique, the light detection and ranging (LiDAR) data providing ground-truth labels for each one or more components;
training a machine learning (ML) model using the obtained component level segmentation of the one or more trees and the high-resolution optical and Synthetic Aperture Radar (SAR) data to predict presence and a location of one or more components of each of the one or more trees;
applying the trained ML model to one or more unknown trees to generate one or more segmented components of the one or more unknown trees utilizing the high-resolution optical and SAR data of the one or more unknown trees; and
training one or more machine learning (ML) models for each of the one or more segmented components of the one or more unknown trees incorporating biomass percentages as a target variable and one or more associated features from the high-resolution satellite data.

12. The one or more non-transitory machine-readable information storage mediums as claimed in claim 11, wherein the one or more instructions which when executed by the one or more hardware processors further cause:
generating a spatio-temporal detailed map of component-wise biomass allocation using the trained one or more ML models for each of the one or more segmented components of the one or more unknown trees;
leveraging a pre-trained ML model to forecast temporal biomass trends and a long-term weather forecast, wherein the pre-trained ML model includes at least one of an autoregressive integrated moving average (ARIMA) model and a long short-term memory (LSTM) model;
integrating the forecasted temporal biomass trends, the long-term weather forecast and a historical information of forest disturbances to improve a prediction accuracy of the pre-trained ML model;
predicting one or more biomass saturation points for each of the one or more components of the one or more unknown trees by harnessing the generated spatio-temporal detailed map of component-wise biomass allocation, the temporal biomass trend, the long-term weather forecast and the historical information of forest disturbances;
creating a Non-Fungible Token (NFT) for each of the one or more unknown trees; and
calculating a dynamic value of the created NFT for each of the one or more unknown trees in terms of market value of the one or more predicted saturation points for each of the one or more components of the and the one or more trees, wherein the one or more saturation points include a biomass value and saturation time in terms of day, week, and year.

13. The one or more non-transitory machine-readable information storage mediums as claimed in claim **11,** wherein the component level segmentation comprises at least one of one or more segmented leaves, one or more segmented branches, a segmented trunk, and a segmented bark.

14. The one or more non-transitory machine-readable information storage mediums as claimed in claim **11,** wherein the NFT for each of the one or more unknown trees comprises at least one of meta data, species of the one or more trees, an age of each of the one or more trees, geo-referenced location of the one or more trees, the historical information of forest disturbances, an above-ground biomass (AGB), a component-wise biomass, and the predicted biomass saturation point.

15. The one or more non-transitory machine-readable information storage mediums as claimed in claim **11,** wherein the historical information of forest disturbances is obtained from a user and derived from the high-resolution satellite data.

## Patentansprüche

1. Prozessorimplementiertes Verfahren (300), umfassend:
Sammeln (302), über eine Eingabe/Ausgabe(E/A)-Schnittstelle, eines nicht-räumlichen und eines unstrukturierten Wissens über einen oder mehrere Bäume einer vordefinierten Region aus einem oder mehreren veröffentlichten Datensätzen und Literaturen, wobei das unstrukturierte Wissen Informationen über geografische Ausdehnung und Klima der vordefinierten Region, Spezies, Typ, Alter jedes des einen oder der mehreren Bäume und einen oder mehrere zugehörige Biomassezuteilungsprozentsätze des einen oder der mehreren Bäume beinhaltet;
Bestimmen (304), über einen oder mehrere Hardwareprozessoren, von räumlichen Echtzeitdaten und einem oder mehreren Umgebungsfaktoren jedes des einen oder der mehreren Bäume unter Verwendung von Fernerfassungsdaten, wobei die Fernerfassungsdaten mindestens eines von hochauflösenden Satellitendaten, Lichtdetektions- und Entfernungsmessungs(LiDAR)-Daten, hochauflösenden optischen und synthetischen Aperturradar(SAR)-Daten und einem oder mehreren wetterbezogenen Indikatoren umfassen;
hierarchisches Integrieren (306), über den einen oder die mehreren Hardwareprozessoren, des gesammelten nicht-räumlichen und unstrukturierten Wissens über den einen oder die mehreren Bäume mit den bestimmten räumlichen Echtzeitdaten und dem einen oder den mehreren Umgebungsfaktoren jedes des einen oder der mehreren Bäume, um geotaggte Musterbaumreferenzdaten für eine Biomassemodellierung zu erzeugen;
Segmentieren (308), über den einen oder die mehreren Hardwareprozessoren, einer oder mehrerer Komponenten aus jedem des einen oder der mehreren Bäume der geotaggten Musterreferenzdaten unter Verwendung der hochauflösenden Satellitendaten, um eine Komponentenebenensegmentierung des einen oder der mehreren Bäume unter Verwendung einer maskenregionsbasierten Faltungsneuronalnetz(R-CNN)-Technik zu erhalten, wobei die Lichtdetektions- und Entfernungsmessungs(LiDAR)-Daten Ground-Truth-Labels für jede der einen oder mehreren Komponenten bereitstellen;
Trainieren (310), über den einen oder die mehreren Hardwareprozessoren, eines Maschinenlern(ML)-Modells unter Verwendung der erhaltenen Komponentenebenensegmentierung des einen oder der mehreren Bäume und der hochauflösenden optischen und synthetischen Aperturradar(SAR)-Daten, um das Vorhandensein und einen Standort einer oder mehrerer Komponenten jedes des einen oder der mehreren Bäume vorherzusagen;
Anwenden (312), über den einen oder die mehreren Hardwareprozessoren, des trainierten ML-Modells auf einen oder mehrere unbekannte Bäume, um eine oder mehrere segmentierte Komponenten des einen oder der mehreren unbekannten Bäume unter Verwendung der hochauflösenden optischen und SAR-Daten des einen oder der mehreren unbekannten Bäume zu erzeugen; und
Trainieren (314), über den einen oder die mehreren Hardwareprozessoren, eines oder mehrerer Maschinenlern(ML)-Modelle für jede der einen oder mehreren segmentierten Komponenten des einen oder der mehreren unbekannten Bäume, die Biomasseprozentsätze und ein oder mehrere assoziierte Merkmale aus den hochauflösenden Satellitendaten enthalten.

2. Prozessorimplementiertes Verfahren (300) nach Anspruch 1, ferner umfassend:
Erzeugen (402), über den einen oder die mehreren Hardwareprozessoren, einer räumlich-zeitlichen detaillierten Karte der komponentenweisen Biomassezuordnung unter Verwendung des trainierten einen oder der trainierten mehreren ML-Modelle für jede der einen oder mehreren segmentierten Komponenten des einen oder der mehreren unbekannten Bäume;
Nutzen (404), über den einen oder die mehreren Hardwareprozessoren, eines vortrainierten ML-Modells, um zeitliche Biomassetrends und eine langfristige Wettervorhersage vorherzusagen, wobei das vortrainierte ML-Modell mindestens eines von einem autoregressiven integrierten gleitenden Mittelwert(ARIMA)-Modell und einem langfristigen Kurzzeitgedächtnis(LSTM)-Modell beinhaltet;
Integrieren (406), über den einen oder die mehreren Hardwareprozessoren, der vorhergesagten zeitlichen Biomassetrends, der langfristigen Wettervorhersage und einer historischen Information von Waldstörungen, um eine Vorhersagegenauigkeit des vortrainierten ML-Modells zu verbessern;
Vorhersagen (408), über den einen oder die mehreren Hardwareprozessoren, eines oder mehrerer Biomassesättigungspunkte für jede der einen oder mehreren Komponenten des einen oder der mehreren unbekannten Bäume durch Nutzen der erzeugten räumlich-zeitlichen detaillierten Karte der komponentenweisen Biomassezuordnung, des zeitlichen Biomassetrends, der langfristigen Wettervorhersage und der historischen Information von Waldstörungen;
Erzeugen (410), über den einen oder die mehreren Hardwareprozessoren, eines Non-Fungible Token (NFT) für jeden des einen oder der mehreren unbekannten Bäume; und
Berechnen (412), über den einen oder die mehreren Hardwareprozessoren, eines dynamischen Werts des erzeugten NFT für jeden des einen oder der mehreren unbekannten Bäume in Bezug auf den Marktwert des einen oder der mehreren vorhergesagten Sättigungspunkte für jede der einen oder mehreren Komponenten des einen oder der mehreren Bäume, wobei der eine oder die mehreren Sättigungspunkte einen Biomassewert und eine Sättigungszeit in Bezug auf Tag, Woche und Jahr beinhalten.

3. Prozessorimplementiertes Verfahren (300) nach Anspruch 1, wobei die Komponentenebenensegmentierung mindestens eines von einem oder mehreren segmentierten Blättern, einem oder mehreren segmentierten Zweigen, einem segmentierten Stamm und einer segmentierten Rinde umfasst.

4. Prozessorimplementiertes Verfahren (300) nach Anspruch 1, wobei der NFT für jeden des einen oder der mehreren unbekannten Bäume mindestens eines von Metadaten, Spezies des einen oder der mehreren Bäume, einem Alter jedes des einen oder der mehreren Bäume, einem georeferenzierten Standort des einen oder der mehreren Bäume, der historischen Information von Waldstörungen, einer oberirdischen Biomasse (AGB), einer komponentenweisen Biomasse und dem vorhergesagten Biomassesättigungspunkt umfasst.

5. Prozessorimplementiertes Verfahren (300) nach Anspruch 1, wobei die historische Information von Waldstörungen von einem Benutzer erhalten und von den hochauflösenden Satellitendaten abgeleitet wird.

6. System (100), umfassend:
einen Speicher (110), der Anweisungen speichert;
eine oder mehrere Eingabe/Ausgabe(E/A)-Schnittstellen (104); und
einen oder mehrere Hardwareprozessoren (108), die mit dem Speicher (110) über die eine oder die mehreren E/A-Schnittstellen (104) gekoppelt sind, wobei der eine oder die mehreren Hardwareprozessoren (108) durch die Anweisungen konfiguriert sind zum:
Sammeln eines nicht-räumlichen und eines unstrukturierten Wissens über einen oder mehrere Bäume einer vordefinierten Region aus einem oder mehreren veröffentlichten Datensätzen und Literaturen, wobei das unstrukturierte Wissen Informationen über geografische Ausdehnung und Klima der vordefinierten Region, Spezies, einen Typ, ein Alter jedes des einen oder der mehreren Bäume und einen oder mehrere zugehörige Biomassezuteilungsprozentsätze des einen oder der mehreren Bäume beinhaltet;
Bestimmen von räumlichen Echtzeitdaten und einem oder mehreren Umgebungsfaktoren jedes des einen oder der mehreren Bäume unter Verwendung von Fernerfassungsdaten, wobei die Fernerfassungsdaten mindestens eines von hochauflösenden Satellitendaten, Lichtdetektions- und Entfernungsmessungs(LiDAR)-Daten, hochauflösenden optischen und synthetischen Aperturradar(SAR)-Daten und einem oder mehreren wetterbezogenen Indikatoren umfassen;
hierarchisches Integrieren des gesammelten nicht-räumlichen und unstrukturierten Wissens über den einen oder die mehreren Bäume mit den bestimmten räumlichen Echtzeitdaten und dem einen oder den mehreren Umgebungsfaktoren jedes des einen oder der mehreren Bäume, um geotaggte Musterbaumreferenzdaten für eine Biomassemodellierung zu erzeugen;
Segmentieren einer oder mehrerer Komponenten aus jedem des einen oder der mehreren Bäume der geotaggten Musterreferenzdaten unter Verwendung der hochauflösenden Satellitendaten, um eine Komponentenebenensegmentierung des einen oder der mehreren Bäume unter Verwendung einer maskenregionsbasierten Faltungsneuronalnetz(R-CNN)-Technik zu erhalten, wobei die Lichtdetektions- und Entfernungsmessungs(LiDAR)-Daten Ground-Truth-Labels für jede der einen oder mehreren Komponenten bereitstellen, wobei die Komponentenebenensegmentierung mindestens eines von einem oder mehreren segmentierten Blättern, einem oder mehreren segmentierten Zweigen, einem segmentierten Stamm und einer segmentierten Rinde umfasst;
Trainieren eines Maschinenlern(ML)-Modells unter Verwendung der erhaltenen Komponentenebenensegmentierung des einen oder der mehreren Bäume und der hochauflösenden optischen und synthetischen Aperturradar(SAR)-Daten, um das Vorhandensein und einen Standort einer oder mehrerer Komponenten jedes des einen oder der mehreren Bäume vorherzusagen;
Anwenden des trainierten ML-Modells auf einen oder mehrere unbekannte Bäume, um eine oder mehrere segmentierte Komponenten des einen oder der mehreren unbekannten Bäume unter Verwendung der hochauflösenden optischen und SAR-Daten des einen oder der mehreren unbekannten Bäume zu erzeugen; und
Trainieren eines oder mehrerer Maschinenlern-Modelle für jede der einen oder mehreren segmentierten Komponenten des einen oder der mehreren unbekannten Bäume, die Biomasseprozentsätze und ein oder mehrere assoziierte Merkmale aus den hochauflösenden Satellitendaten enthalten.

7. System (100) nach Anspruch 6, wobei der eine oder die mehreren Hardwareprozessoren (108) durch die Anweisungen konfiguriert sind zum:
Erzeugen einer räumlich-zeitlichen detaillierten Karte der komponentenweisen Biomassezuordnung unter Verwendung des trainierten einen oder der trainierten mehreren ML-Modelle für jede der einen oder mehreren segmentierten Komponenten des einen oder der mehreren Bäume;
Nutzen eines vortrainierten ML-Modells, um zeitliche Biomassetrends und eine langfristige Wettervorhersage vorherzusagen, wobei das vortrainierte ML-Modell mindestens eines von einem autoregressiven integrierten gleitenden Mittelwert(ARIMA)-Modell und einem langfristigen Kurzzeitgedächtnis(LSTM)-Modell beinhaltet;
Integrieren der vorhergesagten zeitlichen Biomassetrends, der langfristigen Wettervorhersage und einer historischen Information von Waldstörungen, um eine Vorhersagegenauigkeit des vortrainierten ML-Modells zu verbessern;
Vorhersagen eines oder mehrerer Biomassesättigungspunkte für jede der einen oder mehreren Komponenten des einen oder der mehreren unbekannten Bäume durch Nutzen der erzeugten räumlich detaillierten Karte der komponentenweisen Biomassezuordnung, des zeitlichen Biomassetrends, der langfristigen Wettervorhersage und der historischen Information von Waldstörungen;
Erzeugen eines Non-Fungible Token (NFT) für jeden des einen oder der mehreren Bäume; und
Berechnen eines dynamischen Werts des erzeugten NFT in Bezug auf den Marktwert des einen oder der mehreren vorhergesagten Sättigungspunkte für jede der einen oder mehreren Komponenten und einen oder mehrere Bäume, wobei der eine oder die mehreren Sättigungspunkte einen Biomassewert und eine Sättigungszeit in Bezug auf Tag, Woche und Jahr beinhalten.

8. System (100) nach Anspruch 6, wobei die Komponentenebenensegmentierung mindestens eines von einem oder mehreren segmentierten Blättern, einem oder mehreren segmentierten Zweigen, einem segmentierten Stamm und einer segmentierten Rinde umfasst.

9. System (100) nach Anspruch 6, wobei der NFT Metadaten, Spezies des einen oder der mehreren Bäume, ein Alter jedes des einen oder der mehreren Bäume, einen georeferenzierten Standort des einen oder der mehreren Bäume, die historische Information von Waldstörungen, eine oberirdische Biomasse (AGB), eine komponentenweise Biomasse und den vorhergesagten Biomassesättigungspunkt beinhaltet.

10. System (100) nach Anspruch 6, wobei die historische Information von Waldstörungen von einem Benutzer erhalten und von den hochauflösenden Satellitendaten abgeleitet wird.

11. Ein oder mehrere nichtflüchtige maschinenlesbare Informationsspeichermedien, umfassend eine oder mehrere Anweisungen, die bei Ausführung durch einen oder mehrere Hardwareprozessoren bewirken:
Sammeln, über eine Eingabe/Ausgabe(E/A)-Schnittstelle, eines nicht-räumlichen und eines unstrukturierten Wissens über einen oder mehrere Bäume einer vordefinierten Region aus einem oder mehreren veröffentlichten Datensätzen und Literaturen, wobei das unstrukturierte Wissen Informationen über geografische Ausdehnung und Klima der vordefinierten Region, Spezies, Typ, Alter jedes des einen oder der mehreren Bäume und einen oder mehrere zugehörige Biomassezuteilungsprozentsätze des einen oder der mehreren Bäume beinhaltet;
Bestimmen von räumlichen Echtzeitdaten und einem oder mehreren Umgebungsfaktoren jedes des einen oder der mehreren Bäume unter Verwendung von Fernerfassungsdaten, wobei die Fernerfassungsdaten mindestens eines von hochauflösenden Satellitendaten, Lichtdetektions- und Entfernungsmessungs(LiDAR)-Daten, hochauflösenden optischen und synthetischen Aperturradar(SAR)-Daten und einem oder mehreren wetterbezogenen Indikatoren umfassen;
hierarchisches Integrieren des gesammelten nicht-räumlichen und unstrukturierten Wissens über den einen oder die mehreren Bäume mit den bestimmten räumlichen Echtzeitdaten und dem einen oder den mehreren Umgebungsfaktoren jedes des einen oder der mehreren Bäume, um geotaggte Musterbaumreferenzdaten für eine Biomassemodellierung zu erzeugen;
Segmentieren einer oder mehrerer Komponenten aus jedem des einen oder der mehreren Bäume der geotaggten Musterreferenzdaten unter Verwendung der hochauflösenden Satellitendaten, um eine Komponentenebenensegmentierung des einen oder der mehreren Bäume unter Verwendung einer maskenregionsbasierten Faltungsneuronalnetz(R-CNN)-Technik zu erhalten, wobei die Lichtdetektions- und Entfernungsmessungs(LiDAR)-Daten Ground-Truth-Labels für jede der einen oder mehreren Komponenten bereitstellen;
Trainieren eines Maschinenlern(ML)-Modells unter Verwendung der erhaltenen Komponentenebenensegmentierung des einen oder der mehreren Bäume und der hochauflösenden optischen und synthetischen Aperturradar(SAR)-Daten, um das Vorhandensein und einen Standort einer oder mehrerer Komponenten jedes des einen oder der mehreren Bäume vorherzusagen;
Anwenden des trainierten ML-Modells auf einen oder mehrere unbekannte Bäume, um eine oder mehrere segmentierte Komponenten des einen oder der mehreren unbekannten Bäume unter Verwendung der hochauflösenden optischen und SAR-Daten des einen oder der mehreren unbekannten Bäume zu erzeugen; und
Trainieren eines oder mehrerer Maschinenlern(ML)-Modelle für jede der einen oder mehreren segmentierten Komponenten des einen oder der mehreren unbekannten Bäume, die Biomasseprozentsätze und ein oder mehrere assoziierte Merkmale aus den hochauflösenden Satellitendaten enthalten.

12. Ein oder mehrere nichtflüchtige maschinenlesbare Informationsspeichermedien nach Anspruch 11, wobei die eine oder die mehreren Anweisungen, die bei Ausführung durch den einen oder die mehreren Hardwareprozessoren ferner bewirken:
Erzeugen einer räumlich-zeitlichen detaillierten Karte der komponentenweisen Biomassezuordnung unter Verwendung des trainierten einen oder der trainierten mehreren ML-Modelle für jede der einen oder mehreren segmentierten Komponenten des einen oder der mehreren unbekannten Bäume;
Nutzen eines vortrainierten ML-Modells, um zeitliche Biomassetrends und eine langfristige Wettervorhersage vorherzusagen, wobei das vortrainierte ML-Modell mindestens eines von einem autoregressiven integrierten gleitenden Mittelwert(ARIMA)-Modell und einem langfristigen Kurzzeitgedächtnis(LSTM)-Modell beinhaltet;
Integrieren der vorhergesagten zeitlichen Biomassetrends, der langfristigen Wettervorhersage und einer historischen Information von Waldstörungen, um eine Vorhersagegenauigkeit des vortrainierten ML-Modells zu verbessern;
Vorhersagen eines oder mehrerer Biomassesättigungspunkte für jede der einen oder mehreren Komponenten des einen oder der mehreren unbekannten Bäume durch Nutzen der erzeugten räumlich-zeitlichen detaillierten Karte der komponentenweisen Biomassezuordnung, des zeitlichen Biomassetrends, der langfristigen Wettervorhersage und der historischen Information von Waldstörungen;
Erzeugen eines Non-Fungible Token (NFT) für jeden des einen oder der mehreren unbekannten Bäume; und
Berechnen eines dynamischen Werts des erzeugten NFT für jeden des einen oder der mehreren unbekannten Bäume in Bezug auf den Marktwert des einen oder der mehreren vorhergesagten Sättigungspunkte für jede der einen oder mehreren Komponenten des einen oder der mehreren Bäume, wobei der eine oder die mehreren Sättigungspunkte einen Biomassewert und eine Sättigungszeit in Bezug auf Tag, Woche und Jahr beinhalten.

13. Ein oder mehrere nichtflüchtige maschinenlesbare Informationsspeichermedien nach Anspruch 11, wobei die Komponentenebenensegmentierung mindestens eines von einem oder mehreren segmentierten Blättern, einem oder mehreren segmentierten Zweigen, einem segmentierten Stamm und einer segmentierten Rinde umfasst.

14. Ein oder mehrere nichtflüchtige maschinenlesbare Informationsspeichermedien nach Anspruch 11, wobei der NFT für jeden des einen oder der mehreren unbekannten Bäume mindestens eines von Metadaten, Spezies des einen oder der mehreren Bäume, einem Alter jedes des einen oder der mehreren Bäume, einem georeferenzierten Standort des einen oder der mehreren Bäume, der historischen Information von Waldstörungen, einer oberirdischen Biomasse (AGB), einer komponentenweisen Biomasse und dem vorhergesagten Biomassesättigungspunkt umfasst.

15. Ein oder mehrere nichtflüchtige maschinenlesbare Informationsspeichermedien nach Anspruch 11, wobei die historische Information von Waldstörungen von einem Benutzer erhalten und von den hochauflösenden Satellitendaten abgeleitet wird.

## Revendications

1. Procédé mis en œuvre par processeur (300) comprenant :
la collecte (302), via une interface d'entrée/sortie (E/S), d'une connaissance non spatiale et d'une connaissance non structurée d'un ou plusieurs arbres d'une région prédéfinie à partir d'un ou plusieurs ensembles de données publiés, et de publications, dans lequel la connaissance non structurée inclut des informations d'étendue géographique et de climat de la région prédéfinie, d'espèce, de type, d'âge de chacun des un ou plusieurs arbres, et d'un ou plusieurs pourcentages d'attribution de biomasse associés des un ou plusieurs arbres ;
la détermination (304), via un ou plusieurs processeurs matériels, de données spatiales en temps réel et d'un ou plusieurs facteurs environnementaux de chacun des un ou plusieurs arbres à l'aide de données de télédétection, dans lequel les données de télédétection comprennent au moins l'un parmi des données satellites à haute résolution, des données de détection et de télémétrie par la lumière (LiDAR), des données optiques à haute résolution et données de radar à synthèse d'ouverture (SAR), et un ou plusieurs indicateurs liés aux conditions météorologiques ;
l'intégration hiérarchique (306), via les un ou plusieurs processeurs matériels, de la connaissance non spatiale et non structurée collectée des un ou plusieurs arbres avec les données spatiales en temps réel déterminées et les un ou plusieurs facteurs environnementaux de chacun des un ou plusieurs arbres pour générer des données de référence d'arbre échantillon géomarquées pour une modélisation de biomasse ;
la segmentation (308), via les un ou plusieurs processeurs matériels, d'un ou plusieurs composants à partir de chacun des un ou plusieurs arbres des données de référence d'échantillon géomarquées à l'aide des données satellites à haute résolution pour obtenir une segmentation de niveau de composant des un ou plusieurs arbres à l'aide d'une technique Mask R-CNN, les données de détection et de télémétrie par la lumière (LiDAR) fournissant des étiquettes de vérité terrain pour chacun des un ou plusieurs composants ;
l'entraînement (310), via les un ou plusieurs processeurs matériels, d'un modèle d'apprentissage machine (ML) à l'aide de la segmentation de niveau de composant obtenue des un ou plusieurs arbres et des données optiques à haute résolution et données de radar à synthèse d'ouverture (SAR) pour prédire la présence et un emplacement d'un ou plusieurs composants de chacun des un ou plusieurs arbres ;
l'application (312), via les un ou plusieurs processeurs matériels, du modèle ML entraîné à un ou plusieurs arbres inconnus pour générer un ou plusieurs composants segmentés des un ou plusieurs arbres inconnus à l'aide des données optiques à haute résolution et données SAR des un ou plusieurs arbres inconnus ; et
l'entraînement (314), via les un ou plusieurs processeurs matériels, d'un ou plusieurs modèles d'apprentissage machine (ML) pour chacun des un ou plusieurs composants segmentés des un ou plusieurs arbres inconnus incorporant des pourcentages de biomasse et une ou plusieurs caractéristiques associées à partir des données satellites à haute résolution.

2. Procédé mis en œuvre par processeur (300) selon la revendication 1, comprenant en outre :
la génération (402), via les un ou plusieurs processeurs matériels, d'une carte détaillée spatio-temporelle d'allocation de biomasse par composant à l'aide des un ou plusieurs modèles ML entraînés pour chacun des un ou plusieurs composants segmentés des un ou plusieurs arbres inconnus ;
l'exploitation (404), via les un ou plusieurs processeurs matériels, d'un modèle ML pré-entraîné pour prévoir des tendances de biomasse temporelles et une prévision météorologique à long terme, dans lequel le modèle ML pré-entraîné inclut au moins l'un d'un modèle de moyenne mobile intégrée autorégressive (ARIMA) et d'un modèle de mémoire à long et court terme (LSTM) ;
l'intégration (406), via les un ou plusieurs processeurs matériels, des tendances de biomasse temporelles prévues, de la prévision météorologique à long terme et d'une information historique de perturbations forestières pour améliorer une précision de prédiction du modèle ML pré-entraîné ;
la prédiction (408), via les un ou plusieurs processeurs matériels, d'un ou plusieurs points de saturation de biomasse pour chacun des un ou plusieurs composants des un ou plusieurs arbres inconnus en exploitant la carte détaillée spatio-temporelle générée d'allocation de biomasse par composant, la tendance de biomasse temporelle, la prévision météorologique à long terme et l'information historique de perturbations forestières ;
la création (410), via les un ou plusieurs processeurs matériels, d'un jeton non fongible (NFT) pour chacun des un ou plusieurs arbres inconnus ; et
le calcul (412), via les un ou plusieurs processeurs matériels, d'une valeur dynamique du NFT créé pour chacun des un ou plusieurs arbres inconnus en termes de valeur de marché des un ou plusieurs points de saturation prédits pour chacun des un ou plusieurs composants des un ou plusieurs arbres, dans lequel les un ou plusieurs points de saturation incluent une valeur de biomasse et un temps de saturation en termes de jour, de semaine et d'année.

3. Procédé mis en œuvre par processeur (300) selon la revendication 1, dans lequel la segmentation de niveau de composant comprend au moins l'une d'une ou plusieurs feuilles segmentées, d'une ou plusieurs branches segmentées, d'un tronc segmenté et d'une écorce segmentée.

4. Procédé mis en œuvre par processeur (300) selon la revendication 1, dans lequel le NFT pour chacun des un ou plusieurs arbres inconnus comprend au moins l'un de métadonnées, d'espèces des un ou plusieurs arbres, d'un âge de chacun des un ou plusieurs arbres, d'un emplacement géo-référencé des un ou plusieurs arbres, de l'information historique de perturbations forestières, d'une biomasse aérienne (AGB), d'une biomasse par composant, et du point de saturation de biomasse prédit.

5. Procédé mis en œuvre par processeur (300) selon la revendication 1, dans lequel l'information historique de perturbations forestières est obtenue à partir d'un utilisateur et dérivée des données satellites à haute résolution.

6. Système (100) comprenant :
une mémoire (110) stockant des instructions ;
une ou plusieurs interfaces d'entrée/sortie (E/S) (104) ; et
un ou plusieurs processeurs matériels (108) couplés à la mémoire (110) via les une ou plusieurs interfaces E/S (104), dans lequel les un ou plusieurs processeurs matériels (108) sont configurés par les instructions pour :
collecter une connaissance non spatiale et une connaissance non structurée d'un ou plusieurs arbres d'une région prédéfinie à partir d'un ou plusieurs ensembles de données publiés, et de publications, dans lequel la connaissance non structurée inclut des informations d'étendue géographique et de climat de la région prédéfinie, d'espèce, de type, d'âge de chacun des un ou plusieurs arbres, et d'un ou plusieurs pourcentages d'attribution de biomasse associés des un ou plusieurs arbres ;
déterminer des données spatiales en temps réel et un ou plusieurs facteurs environnementaux de chacun des un ou plusieurs arbres à l'aide de données de télédétection, dans lequel les données de télédétection comprennent au moins l'un parmi des données satellites à haute résolution, des données de détection et de télémétrie par la lumière (LiDAR), des données optiques à haute résolution et données de radar à synthèse d'ouverture (SAR), et un ou plusieurs indicateurs liés aux conditions météorologiques ;
intégrer hiérarchiquement la connaissance non spatiale et non structurée collectée des un ou plusieurs arbres avec les données spatiales en temps réel déterminées et les un ou plusieurs facteurs environnementaux de chacun des un ou plusieurs arbres pour générer des données de référence d'arbre échantillon géomarquées pour une modélisation de biomasse ;
segmenter un ou plusieurs composants à partir de chacun des un ou plusieurs arbres des données de référence d'échantillon géomarquées à l'aide des données satellites à haute résolution pour obtenir une segmentation de niveau de composant des un ou plusieurs arbres à l'aide d'une technique Mask R-CNN, les données de détection et de télémétrie par la lumière (LiDAR) fournissant des étiquettes de vérité terrain pour chacun des un ou plusieurs composants, dans lequel la segmentation de niveau de composant comprend au moins l'une d'une ou plusieurs feuilles segmentées, d'une ou plusieurs branches segmentées, d'un tronc segmenté et d'une écorce segmentée ;
entraîner un modèle d'apprentissage machine (ML) à l'aide de la segmentation de niveau de composant obtenue des un ou plusieurs arbres et des données optiques à haute résolution et données de radar à synthèse d'ouverture (SAR) pour prédire la présence et un emplacement d'un ou plusieurs composants de chacun des un ou plusieurs arbres ;
appliquer le modèle ML entraîné à un ou plusieurs arbres inconnus pour générer un ou plusieurs composants segmentés des un ou plusieurs arbres inconnus à l'aide des données optiques à haute résolution et données SAR des un ou plusieurs arbres inconnus ; et
entraîner un ou plusieurs modèles d'apprentissage machine pour chacun des un ou plusieurs composants segmentés des un ou plusieurs arbres inconnus incorporant des pourcentages de biomasse et une ou plusieurs caractéristiques associées à partir des données satellites à haute résolution.

7. Système (100) selon la revendication 6, dans lequel les un ou plusieurs processeurs matériels (108) sont configurés par les instructions pour :
générer une carte détaillée spatio-temporelle d'allocation de biomasse par composant à l'aide des un ou plusieurs modèles ML entraînés pour chacun des un ou plusieurs composants segmentés des un ou plusieurs arbres ;
exploiter un modèle ML pré-entraîné pour prévoir des tendances de biomasse temporelles et une prévision météorologique à long terme, dans lequel le modèle ML pré-entraîné inclut au moins l'un d'un modèle de moyenne mobile intégrée autorégressive (ARIMA) et d'un modèle de mémoire à long et court terme (LSTM) ;
intégrer les tendances de biomasse temporelles prévues, la prévision météorologique à long terme et une information historique de perturbations forestières pour améliorer une précision de prédiction du modèle ML pré-entraîné ;
prédire un ou plusieurs points de saturation de biomasse pour chacun des un ou plusieurs composants des un ou plusieurs arbres inconnus en exploitant la carte détaillée spatialement générée d'allocation de biomasse par composant, la tendance de biomasse temporelle, la prévision météorologique à long terme et l'information historique de perturbations forestières ;
créer un jeton non fongible (NFT) pour chacun des un ou plusieurs arbres ; et
calculer une valeur dynamique du NFT créé en termes de valeur de marché des un ou plusieurs points de saturation prédits pour chacun des un ou plusieurs composants et des un ou plusieurs arbres, dans lequel les un ou plusieurs points de saturation incluent une valeur de biomasse et un temps de saturation en termes de jour, de semaine et d'année.

8. Système (100) selon la revendication 6, dans lequel la segmentation de niveau de composant comprend au moins l'une d'une ou plusieurs feuilles segmentées, d'une ou plusieurs branches segmentées, d'un tronc segmenté et d'une écorce segmentée.

9. Système (100) selon la revendication 6, dans lequel le NFT inclut des métadonnées, des espèces des un ou plusieurs arbres, un âge de chacun des un ou plusieurs arbres, un emplacement géo-référencé des un ou plusieurs arbres, de l'information historique de perturbations forestières, d'une biomasse aérienne (AGB), d'une biomasse par composant, et du point de saturation de biomasse prédit.

10. Système (100) selon la revendication 6, dans lequel l'information historique de perturbations forestières est obtenue à partir d'un utilisateur et dérivée des données satellites à haute résolution.

11. Un ou plusieurs supports de stockage d'informations lisibles par machine non transitoires comprenant une ou plusieurs instructions qui, lorsqu'elles sont exécutées par un ou plusieurs processeurs matériels, amènent :
la collecte, via une interface d'entrée/sortie (E/S), d'une connaissance non spatiale et d'une connaissance non structurée d'un ou plusieurs arbres d'une région prédéfinie à partir d'un ou plusieurs ensembles de données publiés, et de publications, dans lequel la connaissance non structurée inclut des informations d'étendue géographique et de climat de la région prédéfinie, d'espèce, de type, d'âge de chacun des un ou plusieurs arbres, et d'un ou plusieurs pourcentages d'attribution de biomasse associés des un ou plusieurs arbres ;
la détermination de données spatiales en temps réel et d'un ou plusieurs facteurs environnementaux de chacun des un ou plusieurs arbres à l'aide de données de télédétection, dans lequel les données de télédétection comprennent au moins l'un parmi des données satellites à haute résolution, des données de détection et de télémétrie par la lumière (LiDAR), des données optiques à haute résolution et données de radar à synthèse d'ouverture (SAR), et un ou plusieurs indicateurs liés aux conditions météorologiques ;
l'intégration hiérarchique de la connaissance non spatiale et non structurée collectée des un ou plusieurs arbres avec les données spatiales en temps réel déterminées et les un ou plusieurs facteurs environnementaux de chacun des un ou plusieurs arbres pour générer des données de référence d'arbre échantillon géomarquées pour une modélisation de biomasse ;
la segmentation d'un ou plusieurs composants à partir de chacun des un ou plusieurs arbres des données de référence d'échantillon géomarquées à l'aide des données satellites à haute résolution pour obtenir une segmentation de niveau de composant des un ou plusieurs arbres à l'aide d'une technique Mask R-CNN, les données de détection et de télémétrie par la lumière (LiDAR) fournissant des étiquettes de vérité terrain pour chacun des un ou plusieurs composants ;
l'entraînement d'un modèle d'apprentissage machine (ML) à l'aide de la segmentation de niveau de composant obtenue des un ou plusieurs arbres et des données optiques à haute résolution et données de radar à synthèse d'ouverture (SAR) pour prédire la présence et un emplacement d'un ou plusieurs composants de chacun des un ou plusieurs arbres ;
l'application du modèle ML entraîné à un ou plusieurs arbres inconnus pour générer un ou plusieurs composants segmentés des un ou plusieurs arbres inconnus à l'aide des données optiques à haute résolution et données SAR des un ou plusieurs arbres inconnus ; et
l'entraînement d'un ou plusieurs modèles d'apprentissage machine (ML) pour chacun des un ou plusieurs composants segmentés des un ou plusieurs arbres inconnus incorporant des pourcentages de biomasse et une ou plusieurs caractéristiques associées à partir des données satellites à haute résolution.

12. Un ou plusieurs supports de stockage d'informations lisibles par machine non transitoires selon la revendication 11, dans lequel les une ou plusieurs instructions qui, lorsqu'elles sont exécutées par les un ou plusieurs processeurs matériels, amènent en outre :
la génération d'une carte détaillée spatio-temporelle d'allocation de biomasse par composant à l'aide des un ou plusieurs modèles ML entraînés pour chacun des un ou plusieurs composants segmentés des un ou plusieurs arbres inconnus ;
l'exploitation d'un modèle ML pré-entraîné pour prévoir des tendances de biomasse temporelles et une prévision météorologique à long terme, dans lequel le modèle ML pré-entraîné inclut au moins l'un d'un modèle de moyenne mobile intégrée autorégressive (ARIMA) et d'un modèle de mémoire à long et court terme (LSTM) ;
l'intégration des tendances de biomasse temporelles prévues, de la prévision météorologique à long terme et d'une information historique de perturbations forestières pour améliorer une précision de prédiction du modèle ML pré-entraîné ;
la prédiction d'un ou plusieurs points de saturation de biomasse pour chacun des un ou plusieurs composants des un ou plusieurs arbres inconnus en exploitant la carte détaillée spatio-temporelle générée d'allocation de biomasse par composant, la tendance de biomasse temporelle, la prévision météorologique à long terme et l'information historique de perturbations forestières ;
la création d'un jeton non fongible (NFT) pour chacun des un ou plusieurs arbres inconnus ; et
le calcul d'une valeur dynamique du NFT créé pour chacun des un ou plusieurs arbres inconnus en termes de valeur de marché des un ou plusieurs points de saturation prédits pour chacun des un ou plusieurs composants des un ou plusieurs arbres, dans lequel les un ou plusieurs points de saturation incluent une valeur de biomasse et un temps de saturation en termes de jour, de semaine et d'année.

13. Un ou plusieurs supports de stockage d'informations lisibles par machine non transitoires selon la revendication 11, dans lequel la segmentation de niveau de composant comprend au moins l'une d'une ou plusieurs feuilles segmentées, d'une ou plusieurs branches segmentées, d'un tronc segmenté et d'une écorce segmentée.

14. Un ou plusieurs supports de stockage d'informations lisibles par machine non transitoires selon la revendication 11, dans lequel le NFT pour chacun des un ou plusieurs arbres inconnus comprend au moins l'un de métadonnées, d'espèces des un ou plusieurs arbres, d'un âge de chacun des un ou plusieurs arbres, d'un emplacement géo-référencé des un ou plusieurs arbres, de l'information historique de perturbations forestières, d'une biomasse aérienne (AGB), d'une biomasse par composant, et du point de saturation de biomasse prédit.

15. Un ou plusieurs supports de stockage d'informations lisibles par machine non transitoires selon la revendication 11, dans lequel l'information historique de perturbations forestières est obtenue à partir d'un utilisateur et dérivée des données satellites à haute résolution.
